# EUROPEAN PATENT APPLICATION

(11) **EP 4 611 120 A1**
(43) Date of publication of application: **03.09.2025**
(21) Application number: 24160356.2
(22) Date of filing: 28.02.2024
(51) Int. Cl.: H01M 10/613, H01M 10/625, H01M 10/6554

(54) **ELECTRIC ENERGY STORAGE APPARATUS WITH A HEAT TRANSFER DEVICE**

(71) Applicant: MAN Truck & Bus SE, 80995 München (DE)
(72) Inventor: Undale, Nikhil, 411045 Pune (IN)

(57) **Abstract**

The invention relates to an electrical energy storage apparatus (10) for a vehicle. The apparatus (10) comprises a first battery cell (11a); a second battery cell (11b); a cell connector (12), electrically conductively connecting the first and second battery cell (11a, 11b); a wall member (13) arranged at the first and second battery cell (11a, 11b); and a heat transfer device (14), electrically insulating and thermally conductively connecting the cell connector (12) and the wall member (13). The heat transfer device (14) has a first transfer section (14a), connecting a first portion (12a) of the cell connector (12) to the wall member (13), and a second transfer section (14b), connecting a second portion (12b) of the cell connector (12) to the wall member (13). Thereby, the first and second transfer section (14a, 14b) are at least partially separated from each other by a separation region (15), having a reduced thermal conductivity compared to the first and second transfer section (14a, 14b), to reduce a heat transfer between the first and second battery cell (11a, 11b) via the heat transfer device (14).

## Description

The invention relates to an electric energy storage apparatus for a vehicle and a vehicle with a respective electric energy storage apparatus.

Batteries for electric vehicles usually comprise several electrically connected battery cells. To provide electrical connections between the battery cells, typically metallic bus bars are used, wherein each of these bus bars connects a positive terminal of one battery cell to a negative terminal of another battery cell, resulting in total in a series connection of the respective battery cells.

During rapid charging of the battery or even under normal driving conditions, high temperatures may build up in one or more of the bus bars due to the electrical resistance of the bus bars. In addition, during a thermal runaway event where the temperature of one of the battery cells suddenly rises drastically, the thermal connection of the battery cells via the bus bars may allow heat to be transferred to neighboring cells, causing a thermal runaway event in those cells as well, ultimately resulting in a total destruction of the battery.

An object of the invention is to provide an improved electric energy storage apparatus. Preferably, it is an object of the invention to provide an electric energy storage device which prevents a high temperature build-up on bus bars and/or reduces excessive heat propagation between battery cells via bus bars.

These objectives are solved by the subject matters of the independent claims, respectively. Preferred embodiments and applications of the invention are covered by the dependent claims.

According to a first independent aspect, an electric energy storage apparatus, preferably for a vehicle (e.g. for a commercial vehicle), is provided.

The electric energy storage apparatus comprises a first battery cell (e.g. a first prismatic lithium-ion battery cell) and a second battery cell (e.g. a second prismatic lithium-ion battery cell). Preferably, the first and second battery cell form part of a cell stack. For example, the electric energy storage apparatus may comprise a cell stack, including the first and second battery cell.

The electric energy storage apparatus further comprises a (e.g. metallic) cell connector (e.g. a bus bar), electrically conductively connecting the first battery cell and the second battery cell. For example, the cell connector may connect a (e.g. positive or negative) first cell terminal of the first battery cell to a (e.g. negative or positive) second cell terminal of the second battery cell.

The electric energy storage apparatus further comprises a wall member (e.g. side wall member) arranged at the first and second battery cell. For example, the wall member may be part of a (e.g. closed) frame surrounding the cell stack and/or the first and second battery cell.

The electric energy storage apparatus further comprises a heat transfer device, electrically insulating and thermally conductively connecting (e.g. only) the cell connector and the wall member. Preferably, the heat transfer device thus provides an electrical barrier between the cell connector and the wall member, while allowing a (e.g. efficient) heat exchange between the cell connector and the wall member.

The heat transfer device, thereby, has a first transfer section, (e.g. directly) connecting a first portion (e.g. a first end portion) of the cell connector to the wall member, and a second transfer section (e.g. directly) connecting a second portion (e.g. a second end portion) of the cell connector to the wall member. Further, the first transfer section and the second transfer section are at least partially separated from each other by a (e.g. air-filled) separation region, having a reduced thermal conductivity compared to the first and/or second transfer section, preferably to reduce a heat transfer between the first and second battery cell via the heat transfer device.

Advantageously, the claimed solution enables heat to be transferred from the cell connector to the wall member, which acts as a heat sink/dump, so that temperature build-up on the cell connector can be effectively avoided. As a result, the cell connector can be advantageously maintained at an optimum temperature during driving and charging, which has a positive effect on the service life of the electric energy storage apparatus. In addition, by providing the separation region, heat transfer between the first and second battery cell, particularly in the event of a thermal runaway failure, can be advantageously reduced, so that a propagation of a thermal runaway through the cell connector can be effectively avoided.

According to a first aspect, the heat transfer device may (e.g. only) comprise a first layer and a second layer, wherein preferably the first layer and the second layer being of different materials.

In a preferred embodiment, the first layer may be electrically insulating and/or made of a (e.g. silicone and/or polymer) thermal interface material (TIM). For example, the first layer may comprise a flexible and/or compressible TIM pad.

In addition or alternatively, the second layer may be metallic. In addition or alternatively, the second layer may made of copper and/or aluminum and/or steel.

By combining the different materials in a layered structure, the heat transfer device can advantageously provide for a good thermal coupling between the cell connector and the wall member, while ensuring electrical insulation.

According to a further aspect, the first layer may be directly attached (e.g. glued) to the cell connector. Preferably, only the first layer is directly attached to the cell connector, while the second layer has no direct contact with the cell connector. This advantageously ensures a proper electrical insulation between the cell connector and the wall member.

In addition or alternatively, the second layer may be directly attached (e.g. spot welded) to the wall member. Preferably, only the second layer is directly attached to the wall member, while the first layer has no direct contact with the wall member. This advantageously ensures a proper heat exchange between the cell connector and the wall member.

According to a further aspect, the first layer may be flexible and/or compressible. For example, the first layer may elastically deform when a stress is applied and return to its original shape when the applied stress is removed. This advantageously ensures a good thermal contact between the cell connector and the heat transfer device.

In addition or alternatively, the second layer may be stepped and/or bent in a step-like manner. Preferably, the second layer is stepped and/or bent in a step-like manner to compensate for a height difference and/or a distance between the cell connector and the wall member.

In addition or alternatively, the first layer and the second layer may be stacked, e.g. such that regions of the first and second layer having an identical outer contour are arranged flush with each other on the outside. This advantageously simplifies production.

According to a further aspect, the separation region may be formed at least partially by a (e.g. square or rectangular) recess (e.g. a through hole) within the heat transfer device. For example, the recess may be located only in the first layer, only in the second layer, or in both the first layer and second layer.

In addition or alternatively, the separation region may be formed at least partially by a (e.g. straight) slit within the heat transfer device. For example, the slit may extend from an outer edge of the heat transfer device to an inner part of the heat transfer device. Further, the slit may be located, for example, only in the first layer, only in the second layer, or in both the first layer and second layer.

In addition or alternatively, the separation region may be formed at least partially by a perforation (e.g. a perforation line) within the heat transfer device. Preferably, the perforation comprises a regular arrangement of (e.g. identical) holes within the heat transfer device. Further, the perforation may be located, for example, only in the first layer, only in the second layer, or in both the first layer and second layer.

Advantageously, all of the aforementioned separation region variants (recess, slit, perforation) allow for an efficient reduction of the heat transfer between the first and second battery cell, particularly in the event of a thermal runaway failure.

According to a further aspect, the separation region may be formed at least partially by a gap, completely separating the first transfer section and the second transfer section from each other. For example, the gap may completely divide the heat transfer device (e.g. into two separate parts) and/or extend from one outer edge of the heat transfer device to another (e.g. opposite) outer edge of the heat transfer device.

In addition or alternatively, the heat transfer device may be split and/or composed of two separate parts. For example, the heat transfer device may be a multi-part heat transfer device.

Advantageously, these variants (gap, split) also provide an efficient reduction in heat transfer between the first and second battery cell.

According to a further aspect, the separation region may be filled with air. Since air is a poor conductor of heat with a thermal conductivity of 0.024 W/mK, an efficient reduction of the heat transfer between the first and second battery cell via the heat transfer device can be advantageously achieved.

However, additionally or alternatively, the separation region may also comprise a solid or flexible material, having a lower thermal conductivity than the first and/or second transfer section. For example, the recess, slit, perforation, and/or gap may be filled with a heat insulation material.

In addition or alternatively, the separation region may have a thermal conductivity below 1 W/mK, preferably below 0.5 W/mK, particularly preferred below 0.01 W/mK. This again advantageously allows for an efficient reduction in heat transfer between the first and second battery cell.

According to a further aspect, the first battery cell and the second battery cell may be (e.g. mechanically) connected to each other (e.g. directly or indirectly) flat within a plane, called contact plane. For example, a side surface of the first (e.g. prismatic) battery cell and a side surface of the second (e.g. prismatic) battery cell may abut each other flat within the contact plane. Alternatively, the respective side surfaces of the first and second battery cell may be connected indirectly to each other via a flat component (e.g. gap pad). In this case, an extension plane of the flat component may be located within the contact plane.

In an embodiment, the separation region may be located at least partially within the contact plane. For example, the separation region may be located at least partially directly above a zone, where the first and second battery cell abut, or at least partially directly above the gap pad.

In addition or alternatively, the heat transfer device may have a mirror symmetric configuration with respect to the contact plane. For example, the heat transfer device may be symmetrical with respect to the contact plane. This again advantageously simplifies the manufacture of the heat transfer device and ensures an equal thermal connection of the first and second battery cell to the wall member.

According to a further aspect, the heat transfer device may (e.g. directly) connect only the cell connector and the wall member. For example, the heat transfer device may be attached only to the cell connector and the wall member and not to any additional component. This, advantageously, provides a reliable heat dissipation within the wall member.

In addition or alternatively, the heat transfer device may not be in (e.g. direct) contact with any other or further cell connector of the electric energy storage apparatus. For example, the heat transfer device may be associated only with said cell connector. This, advantageously, ensures a good thermal decoupling of the battery cells within the electric energy storage apparatus.

According to a further aspect, a contour of the heat transfer device and a contour of the cell connector may at least partially match each other, preferably such that regions of the cell connector and the heat transfer device having an identical outer contour are arranged flush with each other on the outside. For example, the heat transfer device and the cell connector may be flush with each other on at least two different sides or regions.

In addition or alternatively, a shape of the heat transfer device and a shape of the cell connector may at least partially match each other, and/or a size of the heat transfer device and a size of the cell connector may at least partially match each other. This advantageously provides good thermal contact between the heat transfer device and the cell connector.

In addition or alternatively, the heat transfer device may contact an upper surface of the cell connector and/or an upper surface of the wall member. For example, the heat transfer device may be connected to both the cell connector and the wall member from the same side. This advantageously simplifies the installation of the heat transfer device.

According to a further aspect, the first battery cell and/or the second battery cell may be a prismatic battery cell. For example, the first battery cell and/or the second battery cell may comprise a rigid casing and/or may have a rectangular prismatic shape and/or a box-like shape.

In addition or alternatively, the first battery cell and/or the second battery cell may be a lithium-ion battery cell. For example, the first battery cell and/or the second battery cell may use reversible intercalation of Li⁺ ions into electronically conductive solids to store energy.

In addition or alternatively, the first battery cell and the second battery cell may be arranged in a cell stack. For example, the first and second battery cell may form part of a cell stack, comprising several battery cells stacked side by side along a (e.g. linear) stacking direction.

According to a further aspect, the cell connector may electrically conductively connect a (e.g. positive or negative) first cell terminal of the first battery cell to a (e.g. negative or positive) second cell terminal of the second battery cell. Preferably, the first portion of the cell connector may be (e.g. directly) attached to the first cell terminal and/or the second portion of the cell connector may be (e.g. directly) attached to the second cell terminal. This advantageously ensures a proper electrical connection between the first and second battery cell.

In addition or alternatively, the first portion of the cell connector may be flat. Preferably, the first cell terminal may have a (e.g. corresponding) flat contact surface for attachment (e.g. spot welding) of the first portion of the cell connector. This advantageously ensures a good electrical contact between the cell connector and the first battery cell.

In addition or alternatively, the second portion of the cell connector may be flat. Preferably, the second cell terminal may have a (e.g. corresponding) flat contact surface for attachment (e.g. spot welding) of the second portion of the cell connector. This advantageously ensures a good electrical contact between the cell connector and the second battery cell.

In addition or alternatively, the cell connector may comprise a (e.g. corrugated and/or bent) central portion, connecting the first portion and the second portion to each other. This advantageously allows small changes in the position of the battery cells to be compensated for. Preferably, the central portion may not be in direct contact with the first and/or second cell terminal.

According to a further aspect, the wall member may be a plate (e.g. a side plate). For example, the wall member may have a substantially flat, e.g. rectangular, shape.

In addition or alternatively, the wall member may not be actively cooled. For example, the wall member may be a passive heat sink. This advantageously simplifies the manufacture of the electric energy storage apparatus.

In addition or alternatively, the wall member may not comprise a cooling channel for guiding coolant. For example, the wall member may have the same material thickness throughout.

In addition or alternatively, the electric energy storage apparatus may further comprise a pair of end plates and a further wall member. The wall member, the pair of end plates, and the further wall member may thereby form a (e.g. closed) frame, preferably housing and/or enclosing the first and second battery cell. Preferably, the frame secures and/or tightens the cell stack. This advantageously provides a dual use of the wall member, namely for securing the battery cells and as a heat sink.

According to a further aspect, the energy storage apparatus may further comprise an end connector. Preferably, the end connector is directly attached only to the first second battery cell (e.g. to a first terminal of the first second battery cell) or only to the second battery cell (e.g. to a second terminal of the second battery cell). The end connector may provide an attachment point (e.g. a positive or negative attachment point) for an (e.g. external) electrical connector. The end connector may have a different shape (e.g. a different length) than the cell connector. For example, the end connector may be longer than the cell connector.

In addition, the energy storage apparatus may further comprise a further heat transfer device, electrically insulating and thermally conductively connecting the end connector and the wall member. The further heat transfer device may have a different shape (e.g. different length and/or width) than the heat transfer device. Despite this, the further heat transfer device may be configured as the heat transfer device described herein. By this, the end connector can be advantageously maintained at an optimum temperature during driving and charging, which has a positive effect on the service life of the electric energy storage apparatus.

Although only one heat transfer device and one further heat transfer device are discussed herein for the sake of clarity, the energy storage apparatus may in principal comprise several heat transfer devices (e.g., each associated with a respective cell connector of the energy storage apparatus) and/or several further heat transfer devices (e.g., each associated with a respective end connector of the energy storage apparatus).

Further, the heat transfer device and/or the further heat transfer device may be symmetrical (e.g. mirror symmetric).

According to a further independent aspect, a vehicle (e.g. motor vehicle and/or electric vehicle) is provided. Preferably, the vehicle may be a commercial vehicle (e.g. electric commercial vehicle), such as a truck or a bus. For example, the vehicle may be specifically designed for transporting of goods, for transporting people and/or for towing one or more trailers. The vehicle comprises an electric energy storage apparatus as described herein. Consequently, the aspects described herein in connection with the electric energy storage apparatus are also to be disclosed and claimable in connection with the vehicle and vice versa.

The aspects and features of the foregoing disclosure may be combined in any manner. Further details and advantages are described below with reference to the accompanying figures. The figures show:
- Figure 1A: a top view of an electric energy storage apparatus according to an embodiment, wherein the heat transfer device is omitted;
- Figure 1B: a top view of the electric energy storage of Figure 1A including the heat transfer device;
- Figure 1C: a detailed view of the electric energy storage apparatus of Figure 1A;
- Figure 1D: a detailed view of the electric energy storage apparatus of Figure 1B;
- Figure 2A-3B: different embodiments of a heat transfer device; and
- Figure 4: CFD simulation results for the evolution of maximum temperature of the cell connector in the case of a thermal runaway in an electric energy storage apparatus according to an embodiment.

The embodiments shown in the figures correspond at least in part, so that similar or identical parts are provided with the same reference signs and reference is also made to the description of the other embodiments or figures for their explanation in order to avoid repetitions. Furthermore, for reasons of clarity, not all (identical) components appearing more than once have always been referenced separately.

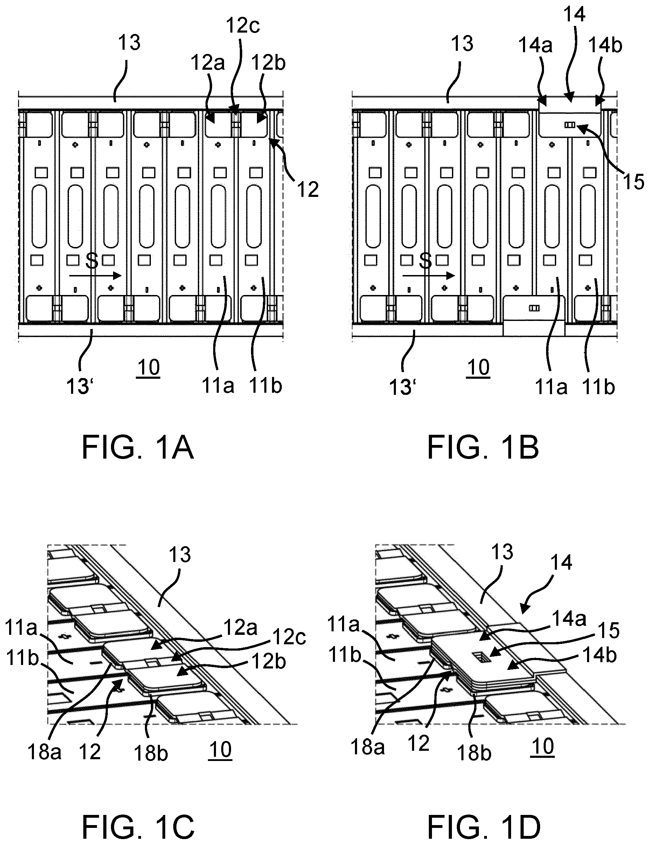

Figures 1A-3B, respectively, show (partially) an electric energy storage apparatus 10 according to an embodiment of the disclosure (as an overview and as a detailed view). For reasons of illustration, some parts of the electric energy storage apparatus 10 have been omitted from Figures 1A and 1C in order to show the battery cells and their terminals in greater detail.

The electric energy storage apparatus 10 may be installed in a vehicle (not shown). The electric energy storage apparatus 10 may provide electric energy to at least one electric drive unit of the vehicle for driving the vehicle. For example, the vehicle may be driven by a central electric drive, several electric wheel hub drives, or several electric drives near the wheels. The electric energy storage apparatus 10 may be designed as a high-voltage electric energy storage apparatus. The high-voltage electric energy storage apparatus may be operated or can be operated with a DC voltage between 60 V and 1.5 kV, particularly preferred between 400 V and 850 V, for example. The electric energy storage apparatus 10 may be externally charged via an electric charging cable connected to a charging socket of the vehicle.

The electric energy storage apparatus 10 comprises a first battery cell 11a, a second battery cell 11b, a cell connector 12, a wall member 13, and a heat transfer device 14.

As shown in Figures 1A-1D, the first battery cell 11a and the second battery cell 11b may be configured identically. For example, the first and second battery cell 11a, 11b may both be configured as prismatic lithium-ion battery cells. Further, the first battery cell 11a may comprise two cell terminals 18a (e.g. a positive and negative cell terminal), referenced as first cell terminals. Accordingly, the second battery cell 11b may comprise two cell terminals 18b (e.g. a positive and negative cell terminal), referenced as second cell terminals.

The first and second battery cell 11a, 11b may be part of a cell stack. The cell stack may further comprise a plurality of additional battery cells (see Figures 1A-1D), preferably identical to the first and second battery cell 11a, 11b. The first and second battery cell 11a, 11b and the additional battery cells may be stacked side by side along a linear stacking direction S.

The electric energy storage apparatus 10 may comprise a (e.g. closed and/or rectangular) frame (not shown). The frame may accommodate the cell stack. The frame may compress the cell stack together, at least along the stacking direction S.

The frame may include a pair of end plates (not shown). The pair of end plates may sandwich the cell stack in the stacking direction. In addition, the wall member 13 may be part of a frame. Further, the frame may include a further wall member 13'. The wall member 13 and the further wall member 13'may sandwich the cell stack with respect to a direction perpendicular to the stacking direction S. For example, the wall member 13 and the further wall member 13' may connect each may connect the pair of end plates and/or may be disposed on opposite lateral sides of the cell stack. Consequently, the wall member 13 may be a configured as a side plate.

Preferably, the wall member 13 is a (e.g. substantially rectangular and/or rigid) metal sheet. The wall member 13 may comprise a cooling channel for guiding coolant. Preferably, however, the wall member is not actively cooled and/or coolable. The wall member 13 may be arranged at the first and second battery cell 11a, 11b. For example, the wall member 13 may be in direct contact with the first and/or second battery cell 11a, 11b. Preferably, the wall member 13 may abut a side surface of the first battery cell 11a and/or a side surface of the second battery cell 11b. The wall member 13 may limit lateral movements of the first and/or second battery cell 11a, 11b.

As can be seen in Figures 1A and 1C, the cell connector 12 electrically conductively connects the first and second battery cell 11a, 11b. For example, the cell connector 12 electrically conductively connects one of the first cell terminals 18a (e.g. the negative first cell terminal) of the first battery cell 11a to one of the second cell terminals 18b (e.g. the positive second cell terminal) of the second battery cell 12a. The cell connector 12 may comprise a flat first portion 12a, a flat second portion 12b and a corrugated and/or bent central portion 12c, connecting the first and second portion 12a, 12b to each other. Preferably, the first portion 12a of the cell connector 12 is directly attached (e.g. welded) to the negative first cell terminal 18a, while the second portion 12b of the cell connector 12 is directly attached (e.g. welded) to the positive second cell terminal 18b. Thus, the cell connector 12 may bridge the first and second battery cell 11a, 11b.

The cell connector 12 may be metallic and/or made of an electrically conductive material. The cell connector 12 may be a single piece and/or integrally formed. The cell connector 12 may electrically conductively connect only the first and second battery cell 11a, 11b. Thus, the cell connector 12 may not directly contact any of the additional battery cells and/or any other terminal of any of the additional battery cells. As a result, the cell connector 12 may also be referred to as an inter-cell cell connector.

As can be seen in Figure 1B and 1D, the heat transfer device 14 connects the cell connector 12 and the wall member 13, preferably for enabling a heat transfer from the cell connector 12 to the wall member 13. In this context, the wall member 13 may act as a heat sink to dump excess heat, for example, in a thermal runaway event. Preferably, the heat transfer device 14 provides a thermally conductive connection between the cell connector 12 and the wall member 13. Thus, heat may be transferred between the cell connector 12 and the wall member 13 via the heat transfer device 14. However, the heat transfer device 14 may also provide an electrically insulating connection between the cell connector 12 and the wall member 13. Thus, no current may be transported between the cell connector 12 and the wall member 13 via the heat transfer device 14. Therefore, the heat transfer device 14 may at least partially have a high electrical resistivity and a good thermal conductivity.

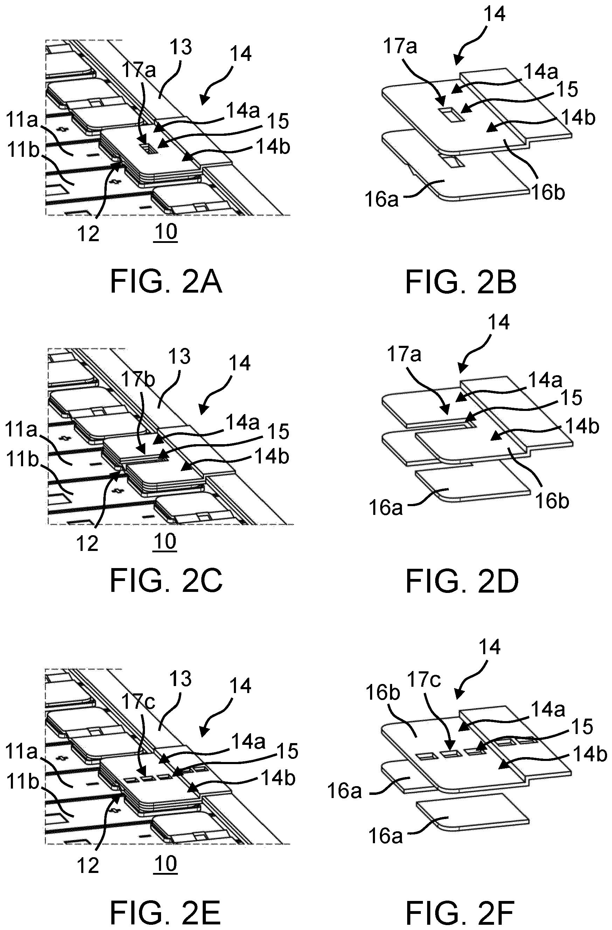

For this, the heat transfer device 14 may have a layered structure (see Figures 2A-3B). For example, the heat transfer device 14 may comprise a first layer 16a and a second layer 16b. The first and second layer 16a, 16b may be made of different materials. The first and second layer 16a, 16b may be stacked on each other. For example, the second layer 16b may be placed on top of the first layer 16a, preferably such that regions of the first and second layer 16a, 16b having an identical outer contour are arranged flush with each other on the outside. Adhesive may be used to bond the first layer 16a and the second layer 16b together.

The first layer 16a may be electrically insulating and/or made of a thermal interface material. The first layer 16a may include thermal grease, elastomeric tapes, a phase change material, and/or a polymer such as polyolefin, polyester, silicone, paraffin or acrylic. The first layer 16a may include a gap pad and/or a thermal pad. The first layer 16a may allow for a heat transfer between the cell connector 12 and the second layer 16b. The first layer 16a may have a thermal conductivity of about 1 to 5 W/mK.

The second layer 16b may be metallic. For example, the second layer 16b may be made of copper and/or steel. The second layer 16b may comprise a (e.g. bent) metal sheet. While the first layer 16a is preferably flat, the second layer 16b may be stepped, for example, to compensate for a difference in height between the cell connector 12 and the wall member 13. Therefore, the second layer 16b may have an upper portion and a lower portion.

Further, the heat transfer device 14 may comprise a first transfer section 14a, a second transfer section 14b, and a, preferably air-filled, separation region 15, at least partially separating the first and second transfer section 14a, 14b (see Figures 2A-3B). Each of the first and second transfer sections 14a, 14b may be layered and/or comprise the first and second layer 16a, 16b or portions thereof.

The first transfer section 14a may connect the first portion 12a of the cell connector 12 to the wall member 13. For example, the first transfer section 14a may comprise a cell connector end and a (e.g. opposite) wall member end. The cell connector end of the first transfer section 14a may be attached (e.g. glued) to the cell connector 12, while the wall member end of the first transfer section 14a may be attached (e.g. welded) to the wall member 13. Preferably, the first transfer section 14a directly contacts an upper surface of the cell connector 12 and/or an upper surface of the wall member 13. For example, the first transfer section 14a may be arranged in an overlapping manner with the cell connector 12 and the wall member 13. Preferably, a contour of the first transfer section 14a and a contour of the cell connector 12 at least partially match each other, e.g. such that regions of the cell connector 12 and the first transfer section 14a having an identical outer contour are arranged flush with each other on the outside.

The cell connector end of the first transfer section 14a may comprise (at least parts of) the first and second layer 16a, 16b. Preferably, however, only the first layer 16a of the cell connector end of the first transfer section 14a directly abuts the cell connector 12. The cell connector end of the first transfer section 14a may comprise only (at least parts of) the second layer 16b. Thus, only the second layer 16b of the wall member end of the first transfer section 14a.

The second transfer section 14b may connect the second portion 12b of the cell connector 12 to the wall member 13. For example, the second transfer section 14b may comprise a cell connector end and a (e.g. opposite) wall member end. The cell connector end of the second transfer section 14a may be attached (e.g. glued) to the cell connector 12, while the wall member end of the second transfer section 14a may be attached (e.g. welded) to the wall member 13. Preferably, the second transfer section 14b directly contacts an upper surface of the cell connector 12 and/or an upper surface of the wall member 13. For example, the second transfer section 14b may be arranged in an overlapping manner with the cell connector 12 and the wall member 13. Preferably, a contour of the second transfer section 14b and a contour of the cell connector 12 at least partially match each other, e.g. such that regions of the cell connector 12 and the second transfer section 14b having an identical outer contour are arranged flush with each other on the outside.

The cell connector end of the second transfer section 14a may comprise (at least parts of) the first and second layer 16a, 16b. Preferably, however, only the first layer 16a of the cell connector end of the second transfer section 14a directly abuts the cell connector 12. The cell connector end of the second transfer section 14a may comprise only (at least parts of) the second layer 16b. Thus, only the second layer 16b of the wall member end of the second transfer section 14a.

As mentioned above, the first and second transfer section 14a, 14b are at least partially separated from each other by the separation region 15. Preferably, the separation region 15 has a reduced thermal conductivity compared to the first and second transfer section 14a, 14b. Thus, the separation region 15 may have a lower thermal conductivity than the first and second layer 16a, 16b. For example, the separation region 15 may have a thermal conductivity below 1 W/mK, preferably below 0.5 W/mK, particularly preferred below 0.01 W/mK. By this, the separation region 15 may be configured to reduce a heat transfer between the first and second battery cell 11a, 11b via the heat transfer device 14.

The separation region 15 may comprise a thermally insulating material and/or a poor conductor of heat. Preferably, the separation region 15 is filled with air, having a thermal conductivity as low as 0.024 W/mK. For example, the separation region 15 may be formed in part by a recess 17a (see Figures 2A and 2B), a slit 17b (see Figures 2C and 2D), and/or a perforation 17c (see Figures 2E and 2F), within the heat transfer device 14.

Preferably, each of the recess 17a, slit 17b, and perforation 17c extend through both the first and second layer 16a, 16b. However, it is also possible, that the recess 17a, slit 17b, and perforation 17c may be located only within the first layer 16a or within the second layer 16b. Thus, the shape of the separation region 15 may be different within the first and second layer 16a. For example, while the first layer 16a of the first and second transfer section 14a, 14b may be separated from each other by a slit, the second layer 16a of the first and second transfer section 14a, 14b may be separated from each other by a perforation (see e.g. Figure 2F).

In addition or alternatively, the recess 17a, slit 17b, and perforation 17c may be located only within the lower portion of the second layer 16a, only within the upper portion of the second layer 16a, or in both the lower and upper portion of the second layer 16a.

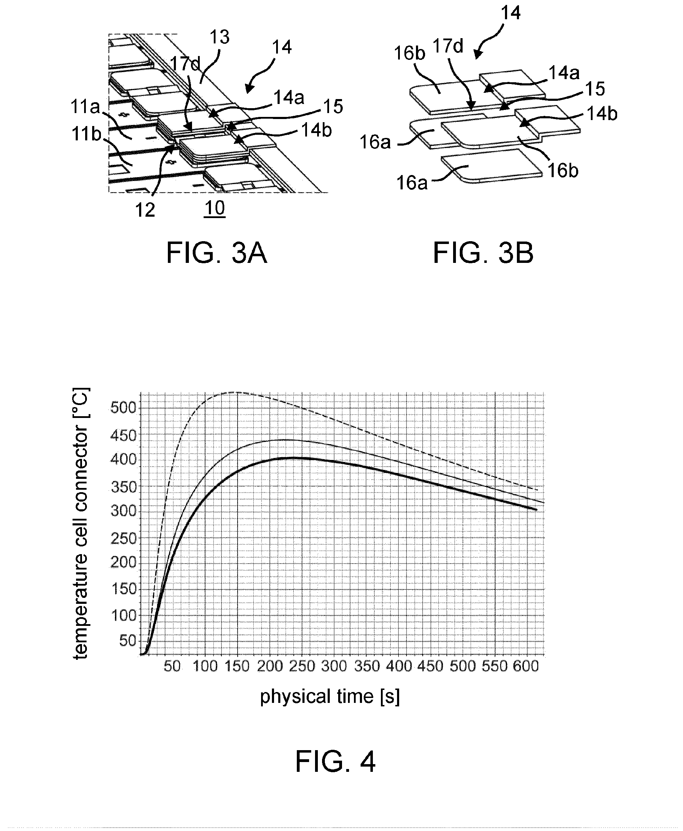

While in the case of the recess 17a, the slit 17b, and the perforation 17c, the first and second transfer section 14a, 14b may still be connected to each other in some manner and/or the heat transfer device 14 may be formed as a single piece, the separation region 15 may also be formed in part by a gap 17d, which completely separates the first and second transfer section 14a, 14b from each other (see Figures 3A and 3B). The gap 17d may, for example, completely divide the heat transfer device 14 into two separate parts and/or extend from one outer edge of the heat transfer device 14 to another (e.g. opposite) outer edge of the heat transfer device 14. Thereby, the gap may be located in both the first layer 16a and the second layer 16b. According to this embodiment, the heat transfer device 14 may be a split and/or multi-part heat transfer device.

Irrespective of the concrete realization of the separation region 15, the separation region 15 may be arranged symmetrically within the heat transfer device 14. For example, the separation region 15 may be arranged on a mirror plane of the heat transfer device 14. In this context, also the first battery cell 11a and the second battery cell 11b may be arranged symmetrically within respect to this mirror plane of the heat transfer device 14. For example, a side surface of the first battery cell 11a and a side surface of the second battery cell 11b may abut each other flat within the mirror plane of the heat transfer device 14. Alternatively, the respective side surfaces of the first and second battery cell 11a, 11b may be connected indirectly to each other via a flat component (e.g. gap pad). In this case, an extension plane of the flat component may be located within the mirror plane of the heat transfer device 14.

Further, the cell connector 12 (e.g. its central portion 12c) may be visible through the separation region 15 (see e.g. Figure 3A). For example, portions of the cell connector 12 may be visible from above through the recess 17a, slit 17b, perforation 17c, or gap 17d. Thus, the heat transfer device 14 may not completely cover the cell connector 12.

In addition to the heat transfer device 14, the energy storage apparatus 10 may optionally comprise at least one further heat transfer device, electrically insulating and thermally conductively connecting a further cell connector and the wall member 13 or a further cell connector and the further wall member 13'. The at least one further heat transfer device may be configured identical to the heat transfer device 14 (see e.g. Figure 1B). Alternatively, the at least one further heat transfer device may have a different shape compared to the heat transfer device 14. For example, the at least one further heat transfer device may be longer than the heat transfer device 14 for electrically insulating and thermally conductively connecting an end connector (not shown) of the energy storage apparatus 10 and the wall member 13.

Figure 4 shows as CFD simulation results for the evolution of the maximum temperature of the cell connector 12 in the case of a thermal runaway event in the first battery cell 11a without the heat transfer device 14 (dashed line) and with the heat transfer device 14 (solid lines), wherein the solid lines correspond to different embodiments of the heat transfer device 14 as described below. In the case of the bare (uncovered) cell connector 12 (dashed line), a maximum temperature of 539 °C is built up on the cell connector 12 after 140 seconds from the start of the thermal runaway event. By providing the heat transfer device 14 (solid lines), the maximum temperature can be reduced and the time to reach this maximum temperature can be delayed. For example, in the case of the heat transfer device 14 with the recess 17a (Figures 2A and 2B) the maximum temperature build-up on the cell connector 12 is only 405 °C (thick solid line), which is reached in about 240 seconds. In the case of the split heat transfer device 14 with the gap 17d (Figures 3A and 3B) the maximum temperature build-up on the cell connector 12 is 442 °C (thin solid line), which is reached at about 220 s. While an overall temperature reduction can be achieved in both cases where the heat transfer device 14 is present, the heat transfer to the second battery cell 11b (not shown) differs by about 40 °C. In detail, the split heat transfer device 14 with the gap 17d allows a greater thermal decoupling of the first and second battery cell 11a, 11b due to the larger separation region 15 and results in a lower heat transfer to the second battery cell 11b.

Although the invention has been described with reference to specific embodiments, it is apparent to one skilled in the art that various modifications may be made and equivalents may be used as substitutes without departing from the scope of the invention. Consequently, the invention is not intended to be limited to the disclosed embodiments, but is intended to encompass all embodiments falling within the scope of the appended claims. In particular, the invention also claims protection for the subject-matter and features of the dependent claims independently of the referenced claims.

### List of reference signs

- 10: electric energy storage apparatus
- 11a: first battery cell
- 11b: second battery cell
- 12: cell connector
- 12a: first portion
- 12b: second portion
- 12c: central portion
- 13: wall member
- 13': further wall member
- 14: heat transfer device
- 14a: first transfer section
- 14b: second transfer section
- 15: separation region
- 16a: first layer
- 16b: second layer
- 17a: recess
- 17b: slit
- 17c: perforation
- 17d: gap
- 18a: first cell terminal
- 18b: second cell terminal
- S: stacking direction

## Claims

1. Electric energy storage apparatus (10) for a vehicle, preferably for a commercial vehicle, comprising:
a first battery cell (11a) and a second battery cell (11b);
a cell connector (12), electrically conductively connecting the first and second battery cell (11a, 11b);
a wall member (13) arranged at the first and second battery cell (11a, 11b); and
a heat transfer device (14), electrically insulating and thermally conductively connecting the cell connector (12) and the wall member (13),
wherein the heat transfer device (14) has a first transfer section (14a), connecting a first portion (12a) of the cell connector (12) to the wall member (13), and a second transfer section (14b), connecting a second portion (12b) of the cell connector (12) to the wall member (13); and
wherein the first and second transfer section (14a, 14b) are at least partially separated from each other by a, preferably air-filled, separation region (15), having a reduced thermal conductivity compared to the first and second transfer section (14a, 14b), preferably to reduce a heat transfer between the first and second battery cell (11a, 11b) via the heat transfer device (14).

2. Electric energy storage apparatus (10) according to claim 1, wherein:
the heat transfer device (14) comprises a first layer (16a) and a second layer (16b), wherein the first and second layer (16a, 16b) are of different materials, wherein preferably:
the first layer (16a) is electrically insulating and/or made of a thermal interface material; and/or
the second layer (16b) is metallic and/or made of copper, aluminum and/or steel.

3. Electric energy storage apparatus (10) according to claim 1 or 2, wherein:
the first layer (16a), preferably only the first layer (16a), is directly attached to the cell connector (12); and/or
the second layer (16b), preferably only the second layer (16b), is directly attached to the wall member (13).

4. Electric energy storage apparatus (10) according to one of the preceding claims, wherein:
the first layer (16b) is flexible and/or compressible; and/or
the second layer (16b) is stepped, preferably to compensate for a height difference between the cell connector (12) and the wall member (13); and/or
the first and second layer (16a, 16b) are stacked, preferably such that regions of the first and second layer (16a, 16b) having an identical outer contour are arranged flush with each other on the outside.

5. Electric energy storage apparatus (10) according to one of the preceding claims, wherein the separation region (15) is formed at least partially by:
a, preferably square or rectangular, recess (17a); and/or
a slit (17b); and/or
a perforation (17c), preferably a perforation line;
within the heat transfer device (14).

6. Electric energy storage apparatus (10) according to one of the preceding claims, wherein:
the separation region (15) is formed at least partially by a gap (17d), completely separating the first and second transfer section (14a, 14b) from each other; and/or
the heat transfer device (14) is split and/or composed of two separate parts.

7. Electric energy storage apparatus (10) according to one of the preceding claims, wherein the separation region (15):
the separation region (15) is filled with air; and/or
has a thermal conductivity below 1 W/mK, preferably below 0.5 W/mK, particularly preferred below 0.01 W/mK.

8. Electric energy storage apparatus (10) according to one of the preceding claims, wherein
the first and second battery cell (11a, 11b) are mechanically connected to each other flat within a contact plane, wherein:
the separation region (15) is located at least partially within the contact plane; and/or
the heat transfer device (14) has a mirror symmetric configuration with respect to the contact plane.

9. Electric energy storage apparatus (10) according to one of the preceding claims, wherein:
the heat transfer device (14) connects only the cell connector (12) and the wall member (13); and/or
the heat transfer device (14) is not in contact with any further cell connector of the electric energy storage apparatus (10).

10. Electric energy storage apparatus (10) according to one of the preceding claims, wherein:
a contour of the heat transfer device (14) and a contour of the cell connector (12) at least partially match each other, preferably such that regions of the cell connector (12) and the heat transfer device (14) having an identical outer contour are arranged flush with each other on the outside; and/or
the heat transfer device (14) contacts an upper surface of the cell connector (12) and/or an upper surface of the wall member (13).

11. Electric energy storage apparatus (10) according to one of the preceding claims, wherein:
the first battery cell (11a) is a prismatic battery cell; and/or
the first battery cell (11a) is a lithium-ion battery cell; and/or
the second battery cell (11b) is a prismatic battery cell; and/or
the second battery cell (11b) is a lithium-ion battery cell; and/or
the first and second battery cell (11a, 11b) are arranged in a cell stack.

12. Electric energy storage apparatus (10) according to one of the preceding claims, wherein:
the cell connector (12) electrically conductively connects a first cell terminal (18a) of the first battery cell (11a) to a second cell terminal (18b) of the second battery cell (12a), wherein preferably the first portion (12a) of the cell connector (12) is directly attached to the first cell terminal (18a) and the second portion (12b) of the cell connector (12) is directly attached to the second cell terminal (18b); and/or
the first portion (12a) of the cell connector (12) is flat and/or the second portion (12b) of the cell connector (12) is flat; and/or
the cell connector (12) comprises a corrugated and/or bent central portion (12c), connecting the first and second portion (12a, 12b) to each other.

13. Electric energy storage apparatus (10) according to one of the preceding claims, wherein:
the wall member (16) is a plate, preferably side plate; and/or
the wall member (16) is not actively cooled and/or does not comprise a cooling channel for guiding coolant; and/or
the electric energy storage apparatus (10) further comprises a pair of end plates and a further wall member (13'), wherein the wall member (16), the pair of end plates, and the further wall member (13') form a frame, housing the first and second battery cell (12a, 12b).

14. Electric energy storage apparatus (10) according to one of the preceding claims, further comprising:
an end connector, which is directly attached only to the first of second battery cell (11a, 11b) and provides an attachment point for an electrical connector, wherein the end connector having a different shape, preferably different length, than the cell connector (12); and
a further heat transfer device, electrically insulating and thermally conductively connecting the end connector and the wall member (13), wherein the further heat transfer device having a different shape, preferably different length, than the heat transfer device (14).

15. Vehicle, preferably electric-vehicle, comprising an electric energy storage apparatus (10) according to one of the preceding claims.
